# EUROPEAN PATENT APPLICATION

(11) **EP 1 422 600 A2**
(43) Date of publication of application: **26.05.2004**
(21) Application number: 03020785.6
(22) Date of filing: 12.09.2003
(51) Int. Cl.: G06F 3/023

(54) **Information processing apparatus, and method of assigning function to key**

(30) Priority: 21.11.2002 JP 2002338059
(71) Applicant: Kabushiki Kaisha Toshiba, Tokyo (JP)
(72) Inventor: Fukui, Kotaro, Minato-ku Tokyo 105-8001 (JP)
(74) Representative: Henkel, Feiler & Hänzel

(57) **Abstract**

An information processing apparatus comprises function database means (11) for storing functions which can be assigned to keys (201, 202, 203), the functions being categorized according to types of the functions, and means (110) for assigning an arbitrary one of the functions stored in the function database means (11) to one of the keys.

## Description

The present invention relates to an information processing apparatus comprising keys to which functions can be assigned, and a method of assigning a function to a key.

Information processing apparatuses such as personal computers are provided with various keys operated by a user, such as hardware keys and operation buttons provided on an operation section and software keys provided on a display screen. As means for assigning particular functions to predetermined ones of these keys, a method of selecting beforehand functions from a list of functions to keys to which functions are assigned has hitherto been applied (refer to, for example, a manual for "ATOK13", Justsystem Corporation, first version issued on September 8, 1999 [p.74 "Key Customize"]).

However, with such a conventional method of assigning a function to a key, the functions that can be assigned to the keys are limited to the functions on the previously prepared list. Accordingly, if for example, the user desires to assign other functions depending on an application, this cannot be achieved by the conventional method.

As described above, the conventional method of assigning a function to a key is not versatile because the functions that can be assigned to the keys are limited to previously prepared functions.

It is an object of the present invention to provide an information processing apparatus comprising a versatile mechanism that assigns a function to a key, and a method of assigning a function to a key.

According to an embodiment of the present invention, an information processing apparatus comprises:
function database means for storing functions which can be assigned to keys, the functions being categorized according to types of the functions; and
means for assigning an arbitrary one of the functions stored in the function database means to one of the keys.

According to an embodiment of the present invention, a method of assigning a function to a key of an information processing apparatus, the method comprises:
a step of creating a database for storing functions categorized according to types of the functions; and
a step of presenting a user with the stored functions.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a main part of an embodiment of the present invention;
FIG. 2 is a view showing a configuration of a database according to the embodiment;
FIG. 3 is a view showing a configuration of a table according to the embodiment;
FIG. 4 is a block diagram showing a configuration of an information processing apparatus according to the embodiment;
FIG. 5 is a flowchart showing a process procedure of automatically constructing a function database 11;
FIG. 6 is a flowchart showing a process procedure of assigning a function to an operation button (key);
FIG. 7 is a flowchart showing a process procedure of changing and adding the function database 11;
FIG. 8 is a flowchart showing a process procedure of changing the function database 11 by operating particular buttons (keys);
FIG. 9 is a flowchart showing a process procedure of assigning functions;
FIG. 10 is a flowchart showing a process procedure of executing a function by operating a key of the group of keys with reference to the function database 11; and
FIG. 11 shows an example of changes in user interface screen made to allow the user to change the function database 11.

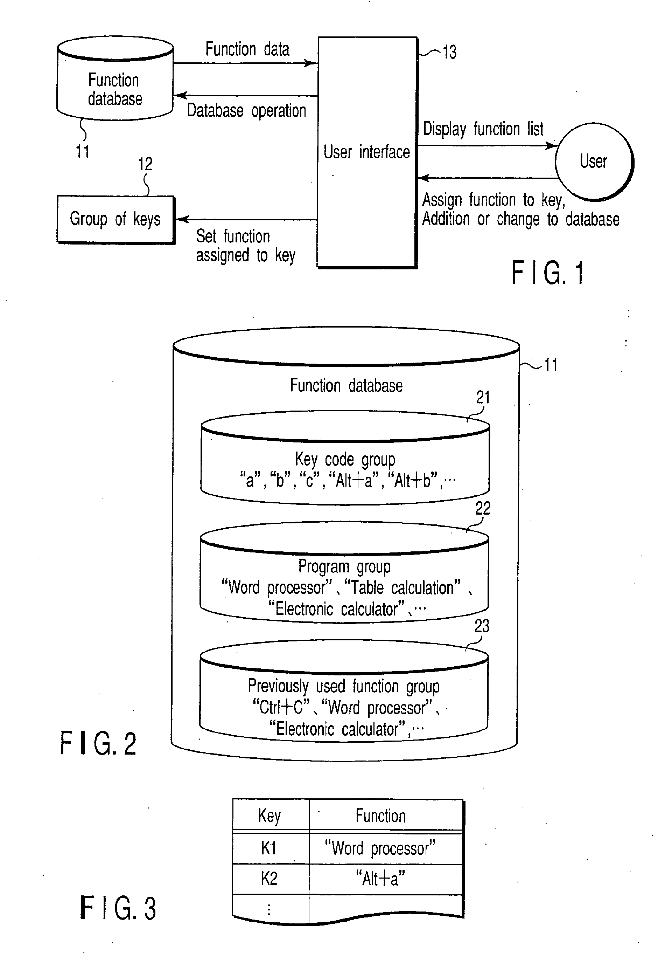

An embodiment of an information processing apparatus according to the present invention will now be described with reference to the accompanying drawings. FIG. 1 is a block diagram showing a main part of the embodiment of the present invention.

Functions that can be assigned to keys are described in a function database 11. The function database 11 is automatically constructed by processing in the system. For example, functions sampled from the system are classified into a key code group and a program group so as to constitute respective databases. In the present embodiment, in addition to these databases, a database for a previously used function group is provided. Thus, every time a function is newly assigned to a key, a function previously assigned to this key is stored in the database for the previously used function group.

A user can arbitrarily assign functions to a group of keys 12. The group of keys 12 includes, for example, keys and operation buttons provided on a keyboard unit, hardware keys and operation buttons provided on a console panel, and software keys provided on a display screen. For example, functions can be assigned to activation buttons for particular programs and a plurality of operation buttons called "general purpose buttons" or the like, all of which are provided on the console panel.

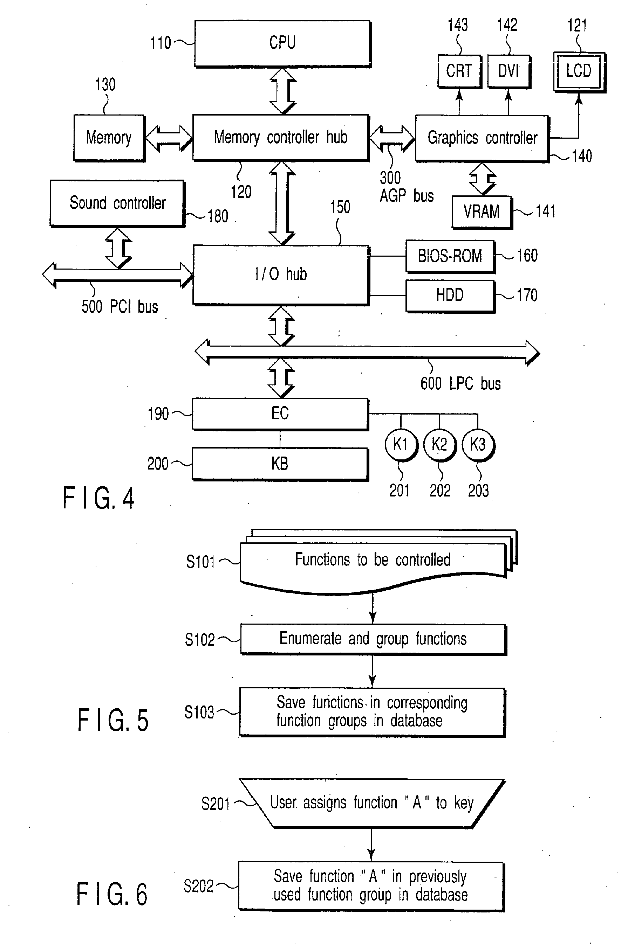

A user interface 13 presents (displays) a function list to the user, controls the function database 11, assigns (sets) functions to the group of keys 12, and performs other operations. The user interface 13 achieves GUI functions using operation screens for various processes shown in FIGS. 6 to 11, described later.

FIG. 2 shows an example of a configuration of the function database 11, shown in FIG. 1. The function database 11 comprises a database 21 for the key code group, a database 22 for the program group, and a database 23 for the previously used function group 23.

The database 21 for the key code group is a group of databases that store, for the group of keys 12 to which the functions can be assigned as shown in FIG. 1, key codes used to provide the same functions as provided if corresponding keys on the keyboard are pressed.

The database 22 for the program group is a group of databases that store programs that can be assigned to the group-of keys 12 to which the functions can be assigned as shown in FIG. 1.

The database 23 for the previously used function group is a group of databases in which functions used by the user are accumulated. As described above, every time a function is newly assigned to a key, the function assigned to this key is stored as a previously used function.

FIG. 3 shows a table referenced in the system when a key of the group of keys 12 is operated to execute the corresponding function with reference to the function database 11. The contents of the table are updated whenever a function is assigned to (defined for) a key of the group of keys 12 to which functions can be assigned. In the group of keys 12, the function of a "word processor" belonging to the program group is assigned to a key K1. The function of "Alt+a" (an operation of a combination of an "Alt" key and an "a" key) belonging to the key code group is assigned to a key K2.

FIG. 4 is a block diagram showing an example of a configuration of an information processing apparatus according to the embodiment. A notebook type personal computer integrated with a display device will be taken by way of example. The computer comprises a computer main body and a display unit (a display section housing). The display unit incorporates a display device 121 using an LCD, as an internal display. The display unit is attached to the computer main body for moved between an open position and a closed position. The computer main body has a housing shaped like a thin box. A top surface of the housing is provided with a keyboard (KB) 200 and a plurality of operation buttons (K1, K2, and K3) 201, 202, and 203 constituting the group of keys 12 to which functions can be assigned as shown in FIG. 1.

The computer main body is provided with a CPU 110, a memory controller hub 120, a memory 130, a graphics controller 140, video RAM (VRAM) 141, an I/O hub 150, a BIOS-ROM 160, a hard disk drive (HDD) 170, a sound controller 180, an embedded controller (EC) 190, the keyboard 200, and other components.

The embedded controller (EC) 190 accepts an operation input through the keyboard (KB) 200 or the operation button (K1, K2, or K3) 201, 202, and 203 to execute a process corresponding to that key (button) operation. When one of the plurality of operation buttons (K1, K2, and K3) 201, 202, and 203 is operated which constitute the group of keys 12 to which functions can be assigned as shown in FIG. 1, the CPU 110 is notified of this button operation.

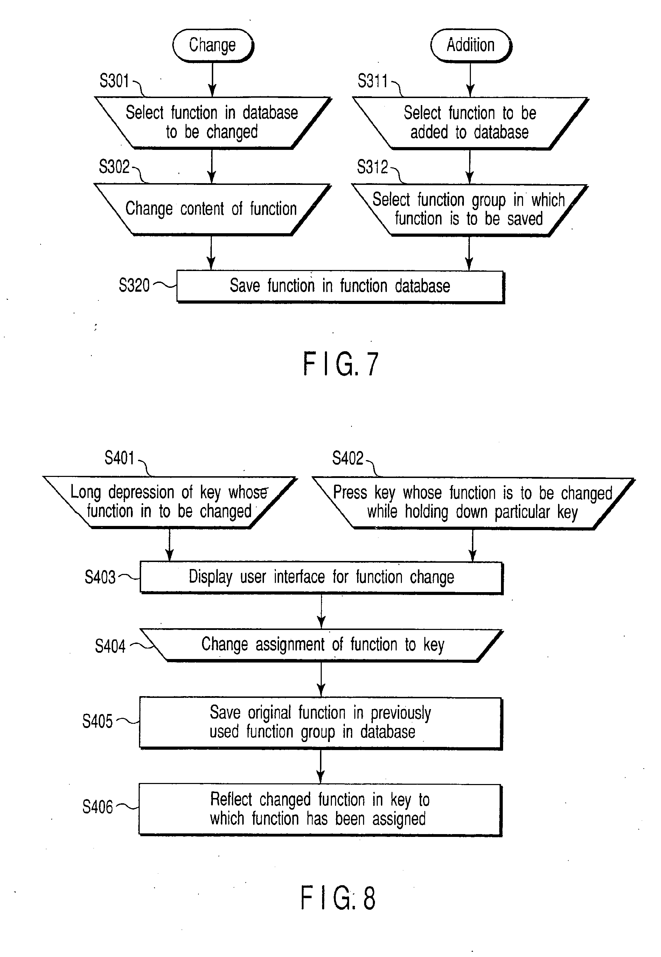

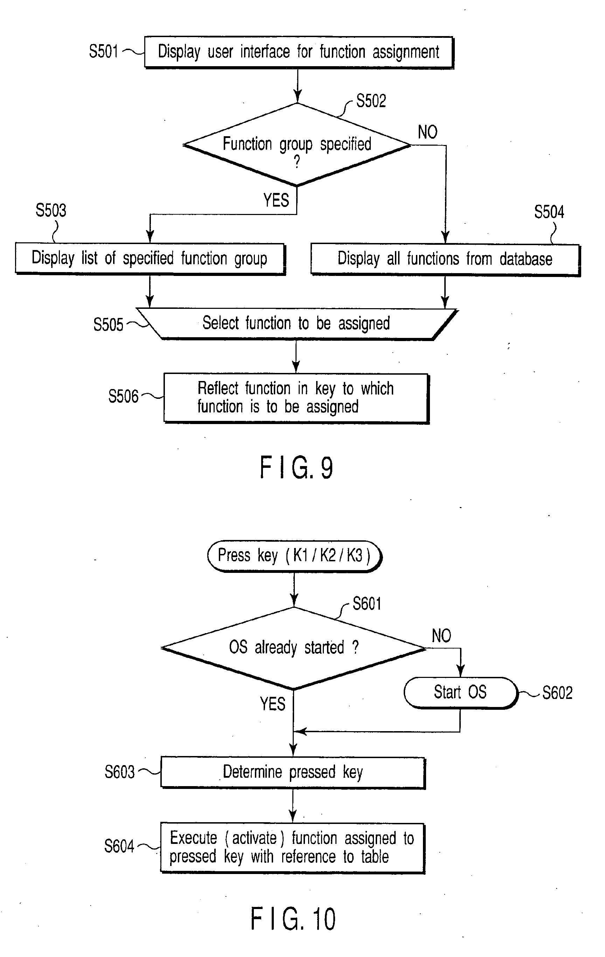

The CPU 110 is provided to control operations of the personal computer, and executes various processes in accordance with an operating system (OS) loaded from the hard disk drive (HDD) 170 into the memory 130, an application program, a utility program, or a BIOS stored in the BIOS-ROM 160, or the like. In this embodiment, under the control of the OS and a program that executes a process of assigning a function to a key, the CPU 110 executes a process of automatically constructing the function database 11 (see FIGS. 5 and 6), a process of changing or adding the function database 11 using the user interface screens (see FIGS. 7 and 8), and a process of assigning a function to an operation button (key) using the user interface screens (see FIG. 9). Furthermore, upon receiving a notification of operation of one of the operation buttons (K1, K2, and K3) 201, 202, and 203 from the embedded controller (EC) 190, the CPU 110 executes a process corresponding to the function assigned to this operation button (key) with reference to the table shown in FIG. 3, under the control of the OS (see FIG. 10).

Under the control of the OS executed by the CPU 110, the graphics controller 140 drives the display of the internal display (LCD) 121 and the display of external displays connected to a DVI terminal 142, a CRT terminal 143, and others. In this case, the graphics controller 140 displays the contents of the automatically constructed function database, displays the user interface screens used to assign a function to an operation button (key), displays the user interface screens used to change and add the function database 11, and performs other operations.

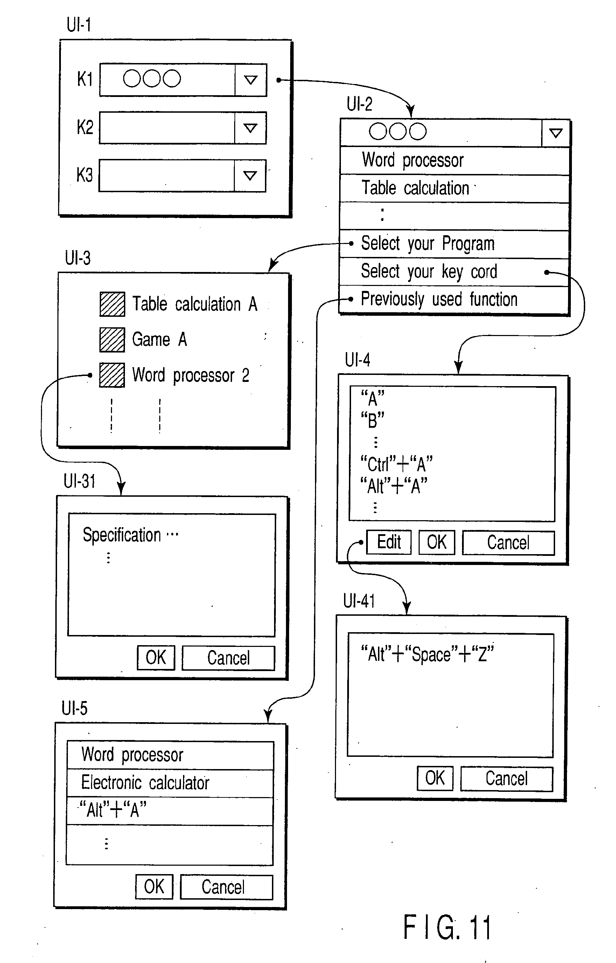

The hard disk drive (HDD) 170, used as external storage, retains the automatically constructed function database 11, the table shown in FIG. 3, and the like. In the VRAM 141, display images of the various user interface screens (see FIG. 11) displays on the internal display (LCD) 121 are expanded.

FIGS. 5 to 10 are flowcharts showing process procedures according to the embodiment. FIG. 5 is a flowchart showing a process procedure of automatically constructing the function database 11. FIG. 6 is a flowchart showing a process procedure of assigning a function to an operation button (key). FIG. 7 is a flowchart showing a process procedure of changing and adding the function database 11. FIG. 8 is a flowchart showing a process procedure of changing the function database 11 by operating particular buttons (keys). FIG. 9 is a flowchart showing a process procedure of assigning functions. FIG. 10 is a flowchart showing a process procedure of executing a function by operating a key of the group of keys 12 (operation buttons 201 to 203) with reference to the function database 11.

FIG. 11 shows an example of changes in user interface screen made to allow the user to change the function database 11, to execute an editing process such as addition, and to assign a function to a key (UI-1→UI-2→UI-4→UI-41, UI-1→UI-2→UI-5) and an example of changes in user interface screen made to allow the user to operate a key of the group of keys 12 to execute the corresponding function with reference to the function database 11 (UI-2→UI-3→UI-31). In this figure, reference character UI-1 denotes a user interface screen that allows the user to select an arbitrary one (key) of the plurality of operation buttons (K1, K2, and K3) 201, 202, and 203, constituting the group of keys 12 to which functions can be assigned. Reference character UI-2 denotes a user interface screen that allows the user to select a function assigned to a specified (selected) key. The user interface screen UI-2 allows the user to select a preset function (in the figure, a "word processor" or a "table calculation") that can be assigned to a key, as well as a function (Select your Program or Select your Key code) arbitrarily assigned by the user and a previously used function. Program functions (Select your Program) that can be arbitrarily assigned by the user include various application programs (for example, see the user interface screen UI-3 ["table calculation A" and "game A"]) as well as arbitrary files (for example, see user interface screen UI-3 ["word processor 2"]→user interface screen UI-31).

With reference to the drawings, description will be given of operations of the embodiment of the present invention. In this case, the plurality of operation buttons (K1, K2, and K3) 201, 202, and 203, constituting the group of keys 12 to which functions can be assigned, will be simply referred to as the "keys".

Under the control of the OS and the program that executes a process of assigning a function to a key, the CPU 110 executes a process of automatically constructing the function database 11 as shown in FIGS. 5 and 6, a process of changing or adding the function database 11 using the user interface screens as shown in FIGS. 7 and 8, a process of assigning a function to a key using the user interface screen as shown in FIG. 9, and other processes. Furthermore, upon receiving a notification of operation of one of the operation buttons (K1, K2, and K3) 201, 202, and 203 from the embedded controller (EC) 190, the CPU 110 executes the function associated with depression of the key to which this function is assigned as shown in FIGS. 10 and 11.

### (1) Automatic Construction of Function Database

The function database 11 is automatically constructed by the process shown in FIGS. 5 and 6.

When the system is started, the function database 11 having the database 21 for the key code group and the database 22 for the program group as shown in FIG. 2 is automatically constructed by sampling functions (programs and key codes) that can be assigned to the keys, from various programs and key codes used in the system and grouping and saving these functions (steps S101 to S103 in FIG. 5).

Furthermore, after the system has been started, every time the user assigns a function to a key, the assigned function is saved as a previously used function to construct the database 23 for the previously used function group in the function database 11 (steps S201 and S202 in FIG. 6).

The function database 11, comprising the database 21 for the key code group, the database 22 for the program group, and the database 23 for the previously used function group, is generated in the memory 130 as main storage and saved in the HDD 170 as external storage for the processes described later.

### (2) Change and Addition to Function Database

On the function database 11 automatically constructed as described above, the user can use a predetermined user interface to specify a function group and change a function in the function database 11 or add a function to it. When on a predetermined user interface screen (for example, see the user interface screen UI-2, UI-4, or UI-41, shown in FIG. 11), the user specifies a function group and requests and instructs a change or addition of a function, a process of changing (steps S301, S302, and S320 in FIG. 7) or adding (steps S311, S312, and S320 in FIG. 7) the function is executed on the specified one of the function groups 21, 22, and 23 constituting the function database 11.

### (3) Process of Changing Function Database by Operating Particular Key

By pressing, for a predetermined time, a key the function of which is to be changed (long depression of a key) (step S401 in FIG. 8) or simultaneously pressing the key the function of which is to be changed and a preset particular key (depression of a combination of keys) (step S402 in FIG. 8), a user interface screen for function change is displayed to enable the assignment of the function to the key to be changed on this user interface screen (for example, see the user interface screen UI-2, UI-4, or UI-41, shown in FIG. 11) (steps S403 and S404 in FIG. 8). In this case, every time the user assigns a function to a key, the assigned function is saved in the database 23 for the previously used function group in the function database 11 as a previously used function (step S405 in FIG. 8). Further, the changed function is reflected in the key (step S406 in FIG. 8).

### (4) Process of Assigning Function to Key

When assigning a function to a key, the user selects the key to which the function is to be assigned and the function assigned to the key on a user interface screen for a list of keys and functions (for example, see the user interface screen UI-1 or UI-2, shown in FIG. 11) (steps S501 to S505 in FIG. 9). In this case, when one of the function groups (key code (Select your Key code)/program (Select your Program)/previously used function) is selected on the user interface screen for a list of functions, a list of functions in the selected function group is displayed (for example, see the user interface screen UI-3 or UI-4, shown in FIG. 11) (step S503 in FIG. 9). When no functions groups are selected, all the functions registered in the function database 11-are displayed in list form so as to be freely scrolled (step S504 in FIG. 9). When a function to be assigned is selected on the function list screen (step S505 in FIG. 9), the function selected on the function list screen is reflected in the selected target key (step S506 in FIG. 9).

### (5) Process Executed upon Pressing key to which Function has Been Assigned

The key to which the function has been assigned becomes an operation button that directly starts the system (OS). That is, if the operation of the system has been stopped (for example, the system has been shut down or its operation has been suspended) and the OS has not been started (step S601 NO in FIG. 10), when the user presses the key to which the function has been assigned, the OS is started (step S602 in FIG. 10) to start up the system. When the OS has been started (step S601 YES in'FIG. 10), it is determined which key is pressed (step S603 in FIG. 10). Then, with reference to the table shown in FIG. 3, the function assigned to the operated key is executed (step S604 in FIG. 6). For example, when the user selects "Select your Program" on the user interface screen Ul-2, shown in FIG. 11, and on the user interface screen UI-3, associated with this selection, selects the user created file "word processor 2", the "word processor 2" file (user interface screen UI-31) is opened to enable file operations.

The above function of assigning a function to a key provides a database having a list displayed as functions assigned to the keys, and allows the user to add data to the database or change the database. Furthermore, the functions are grouped, so that each function can be easily assigned to one of the keys.

The automatic construction of the function database saves the user's operation of searching for a function to be assigned. The presentation of the grouped functions enables the user to select easily a function to be assigned.

Further, the automatic construction of the function database allows the user to search easily for a function to be assigned and enables the functions to be presented to groups. This provides a versatile mechanism that dynamically assigns a function to a key.

Furthermore, if a new function is assigned to a key, a function previously used for this key is presented. This allows the user to change easily the assignment of functions frequently used. Further, using user interface means for displaying only means for setting a key to be changed without presenting means for setting changes in the whole group of keys, and visually presenting the position of the key in the apparatus, the user can easily check the key to be changed.

With the process of automatically constructing the key code group and the program group in the function database 11, the group can be reconstructed in accordance with a predetermined change of event (for example, a change or update of a program function not involving restarting the system) or at preset time intervals. Further, in a system or the like to which the present invention is applied, it is possible to change as required the configuration of the function database 11 shown in FIG. 2, the configuration of the table shown in FIG. 3, the configuration of the apparatus (system) shown in FIG. 4, and other configurations.

As described above, the present invention provides an information processing apparatus comprising a versatile mechanism that assigns a function to a key.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

## Claims

1. An information processing apparatus **characterized by** comprising:
function database means (11) for storing functions which can be assigned to keys (201, 202, 203), the functions being categorized according to types of the functions; and
means (110) for assigning an arbitrary one of the functions stored in the function database means (11) to one of the keys.

2. The apparatus according to claim 1, **characterized in that** the function database means (11) stores the functions classified into a key code group and a program group.

3. The apparatus according to claim 1, **characterized in that** the function database means (11) stores the functions classified into at least a key code group, a program group, and a previously used function group.

4. The apparatus according to claim 1, **characterized in that** the assigning means (110) comprises a user interface for specifying a key to which a function is to be assigned.

5. The apparatus according to claim 1, **characterized in that** the assigning means (110) comprises a user interface which presents a user with the functions stored in the function database means (11) and categorized according to types of the functions.

6. The apparatus according to claim 1, **characterized in that** the assigning means (110) comprises a user interface which presents a user with functions assigned to the keys and functions which can be assigned to the keys.

7. The apparatus according to claim 1, **characterized in that** the assigning means (110) comprises a user interface for selecting and changing any of the functions stored in the function database means (11) and functions assigned to the keys.

8. The apparatus according to claim 3, **characterized in that** the assigning means (110) comprises a user interface for selecting a group including functions to be assigned to the keys.

9. The apparatus according to claim 1, **characterized in that** the function database means (11) stores functions for application programs managed by a system or programs which can be started and functions for key codes managed by the system or key codes that can be combined together.

10. The apparatus according to claim 4, **characterized in that** the user interface presents the user with one of hardware keys, operation buttons, software keys, and software buttons as keys to which functions can be assigned.

11. The apparatus according to claim 3, **characterized in that** the assigning means (110) comprises means for, when a new function is assigned to one of the keys, transferring a function previously assigned to this key from the key code group or program group related to this key to the previously used function group.

12. The apparatus according to claim 7, **characterized by** further comprising means for presenting the user with an operation screen on which assignment of a function to a key to which the function has been assigned is changed based on a pressing condition of the key.

13. A method of assigning a function to a key of an information processing apparatus, the method comprising:
a step of creating a database for storing functions categorized according to types of the functions; and
a step of presenting a user with the stored functions.

14. The method according to claim 13, **characterized in that** the creating step comprises creating the database which stores the functions classified into a key code group and a program group.

15. The method according to claim 13, **characterized in that** the presenting step comprises selectively presenting the user with the functions according to the types of the functions.

16. The method according to claim 13, **characterized in that** the presenting step comprises presenting the user with an arbitrary one of the functions.

17. The method according to claim 13, **characterized in that** the creating step comprises creating the database which stores the function assigned to a key before for a previously used function group.

18. The method according to claim 13, **characterized in that** the presenting step comprises presenting the user with an operation screen on which assignment of a function to a key to which the function has been assigned is changed based on a pressing condition of the key.

19. The method according to claim 13, **characterized in that** the presenting step comprises presenting the user with assignable keys to which functions can be assigned and a step of presenting the user with a location of the assignable key.
